Europäisches Patentamt

European Patent Office

Office européen des brevets

(11) Numéro de publication : **0 296 914 B1**

(12) **FASCICULE DE BREVET EUROPEEN**

(45) Date de publication du fascicule du brevet :
04.03.92 Bulletin 92/10

(51) Int. Cl.⁵ : **H04N 11/08, H04N 7/00**

(21) Numéro de dépôt : **88401376.4**

(22) Date de dépôt : **07.06.88**

(54) **Procédé et dispositif de télévision à multiplexage temporel.**

(30) Priorité : **10.06.87 FR 8708066**

(43) Date de publication de la demande :
**28.12.88 Bulletin 88/52**

(45) Mention de la délivrance du brevet :
**04.03.92 Bulletin 92/10**

(84) Etats contractants désignés :
**DE GB NL**

(56) Documents cités :
**EP-A- 0 146 713**
**EP-A- 0 168 104**
**N.H.K. LABORATORIES NOTE, no. 304, septembre 1984, pages 1-12, NHK, Tokyo, JP; Y. NINOMIYA: "A single channel HDTV broadcast system - the MUSE"**
**RUNDFUNKTECHNISCHE MITTEILUNGEN, vol. 29, no. 5, septembre-octobre 1985, pages 229-246, Norderstedt, DE; C. DOSCH: "D- und D2-MAC/Paket - Die Mitglieder der MAC-Fernsehstandardfamilie mit geschlossener Basisbanddarstellung"**

(73) Titulaire : **ETAT FRANCAIS représenté par le Secrétariat d'Etat aux Postes et Télécommunications (CENTRE NATIONAL D'ETUDES DES TELECOMMUNICATIONS) 38-40 Rue du Général Leclerc F-92131 ISSY LES MOULINEAUX (FR)**
Titulaire : **TELEDIFFUSION DE FRANCE 10, rue d'Oradour sur Glane F-75015 Paris (FR)**

(72) Inventeur : **Veillard, Jacques La Vizeule Montgamont F-35760 Saint Gregoire (FR)**
Inventeur : **Declerck, Christophe 26 Rue de la Motte F-35630 Hede (FR)**
Inventeur : **Lassalle, Roselyne 3 A, place du 50ème d'Artillerie F-35000 Rennes (FR)**

(74) Mandataire : **Fort, Jacques CABINET PLASSERAUD 84, rue d'Amsterdam F-75009 Paris (FR)**

## Description

L'invention concerne les procédés et dispositifs de télévision utilisant un multiplex temporel de signaux d'image analogiques et de signaux numériques de son et de données, du type connu sous la dénomination générale X-MAC/PAQUETS.

A l'heure actuelle, deux systèmes X-MAC/PAQUETS ont été normalisés pour la télévision directe par satellite, dans un canal qui offre une largeur de bande de 27 MHz. Dans un tel canal, il est possible de transmettre un signal dont la bande de base s'étend jusqu'à 12 MHz environ. Cette capacité est surabondante pour une image MAC au format normal de 4/3, qui exige une largeur de bande de 8,4 MHz, et permettrait de transmettre un signal analogique échantillonné dont la bande de base s'étend jusqu'à 12 MHz environ. Cette largeur de bande permet en conséquence de transmettre une image de télévision à haute définition en format 16/9, dite TVHD, si on utilise des techniques de sous-échantillonnage. Mais la restitution de l'image n'est satisfaisante qu'à condition d'associer au sous-échantillonnage une détection de mouvement et de transmettre, en même temps que les signaux d'image, des informations représentant le mouvement, les contours, la texture, etc. de l'image. On connaît déjà divers modes de génération de tels signaux : un exemple en est donné dans le document WO-A-85/02080 (Independent Broadcasting Authority).

La transmission sous forme numérique des informations d'assistance correspondantes, en multiplexage temporel avec les autres composantes, ne pose pas de problème majeur lorsque le système utilisé est dans le C-MAC/PAQUETS qui emploie le codage MDP 2/4 (dit aussi 2/4 PSK) et la transmission numérique par salves à 20,25 Mbits/s, offrant un débit moyen élevé.

Par contre, dans le cas du D2-MAC/PAQUETS qui emploie le codage duobinaire du signal numérique avec un débit instantané de 10,125 Mbits/s seulement, cette transmission de données complémentaires semble, à première vue, impossible, sauf à dégrader le service de base par application de la solution décrite dans le document "Spécification du Système D2-MAC/PAQUETS", ETAT FRANCAIS, Septembre 1985, auquel on pourra se reporter.

L'invention vise à permettre la diffusion de programmes de télévision à haute définition sous une forme compatible avec la Norme D2-MAC/PAQUETS, définie dans le document mentionné ci-dessus, de façon que la réception reste possible par des récepteurs normaux moyennant une simple dégradation et que la réception de haute qualité n'exige que des adjonctions mineures aux récepteurs D2-MAC/PAQUETS normaux.

Pour cela, l'invention utilise le fait que le choix d'un débit de 10,125 Mbits/s pour le D2-MAC/PAQUETS résulte surtout du désir de rendre la diffusion possible sur les réseaux terrestres, ce que ne permet pas le C-MAC/PAQUETS. Mais, en cas de diffusion par satellite ou, plus généralement, sur un canal à large bande, un débit instantané de 20,25 Mbits/s reste possible. L'invention propose en conséquence un procédé de diffusion de programme de télévision à haute définition, compatible avec la Norme D2-MAC/PAQUETS, utilisant un multiplex temporel de signaux d'images analogiques et de signaux numériques de son et de données, caractérisé en ce qu'on inclut dans le multiplex des données complémentaires d'assistance associées à l'image MAC, sous forme de salves de débit instantané égal à 20,25 Mbits/s émis à la place des signaux d'image pendant certaines au moins des lignes de suppression trame.

Suivant la Norme D2-MAC/PAQUETS, les périodes de suppression trame disponibles comportent les lignes 1 à 22 et 311 à 334 (la portion "image" des lignes 623 et 624 et la totalité de la ligne 625 étant réservées pour des services particuliers). On dispose ainsi de toute la partie affectée à l'image sur 46 lignes. En fait, il suffit de 40 lignes pour disposer d'un débit moyen d'environ 1,1 Mbit/s, suffisant pour transmettre les données complémentaires associées à l'image, appelées souvent DATV.

L'invention propose également un dispositif de diffusion permettant de mettre en oeuvre le procédé ci-dessus et qui comprend, à l'émission, des moyens pour multiplexer une composante analogique, constituée par un signal d'image sous-échantillonné et une première composante numérique, constituée par un signal de son et de données codé en duobinaire avec un débit de 10,125 Mbits/s, caractérisé en ce que le multiplexeur reçoit de plus une seconde composante numérique, constituée par des données complémentaires associées au signal d'image, à codage duobinaire avec un débit de 20,25 Mbits/s.

L'invention propose également un récepteur permettant de reconstituer l'image à haute définition, se différenciant d'un récepteur D2-MAC/PAQUETS conventionnel (qui ignorera les données complémentaires associées au signal d'image) en ce qu'il comporte une sortie supplémentaire des multiplexeurs et des moyens de décodage des données complémentaires permettant de reconstruire l'image à haute définition. Un circuit spécialisé permettra de reconnaître un mot d'identification du type d'image, contenu par exemple dans la ligne 625.

L'invention sera mieux comprise à la lecture de la description qui suit de modes particuliers de réalisation, donnés à titre d'exemples non limitatifs. La description se réfère aux dessins qui l'accompagnent, dans lesquels :

– la Figure 1 est un schéma de principe montrant la structure d'une trame de signal de diffusion X-MAC-

/PAQUETS ;

– la Figure 2 est un schéma montrant la structure d'une ligne de la suppression trame d'un signal mettant en oeuvre l'invention ;

– la Figure 3 est un synoptique de principe montrant une constitution possible des moyens fournissant, à l'émission, le multiplex temporel des signaux analogiques et numériques, c'est-à-dire le signal modulant ;

– la Figure 4 montre, de façon simplifiée, la partie d'un émetteur de télévision destiné au codage et au filtrage des données complémentaires associées à l'image, suivant un mode particulier de réalisation de l'invention ;

– la Figure 5 est une courbe représentative d'une fonction de transfert G(f) utilisable pour le filtre de la Figure 4 ;

– la Figure 6, similaire à la Figure 3, montre une variante de réalisation permettant d'utiliser un seul filtre analogique ;

– la Figure 7 est une courbe représentative d'une fonction de transfert H(f) utilisable comme filtre unique pour le circuit de la Figure 6 ;

– la Figure 8 montre une fonction de transfert utilisable pour le préfiltrage des signaux numériques à 10,125 Mbits/s, avant le filtrage analogique ;

– les Figures 9 et 10 sont des synoptiques de principe montrant des circuits numériques de préfiltrage utilisables respectivement pour les données à 10,125 Mbits/s et 20,25 Mbits/s ;

– la Figure 11 est un schéma de principe montrant une constitution de principe de la partie concernée par l'invention d'un récepteur de télévision destiné à exploiter un signal fourni par un émetteur utilisant le schéma de la Figure 6 ;

– la Figure 12 est un schéma d'un décodeur duobinaire à seuils applicable au D2-MAC ;

– les Figures 13 et 14 sont des schémas de décodeurs utilisant un décodage de Viterbi et utilisables dans un récepteur suivant l'invention.

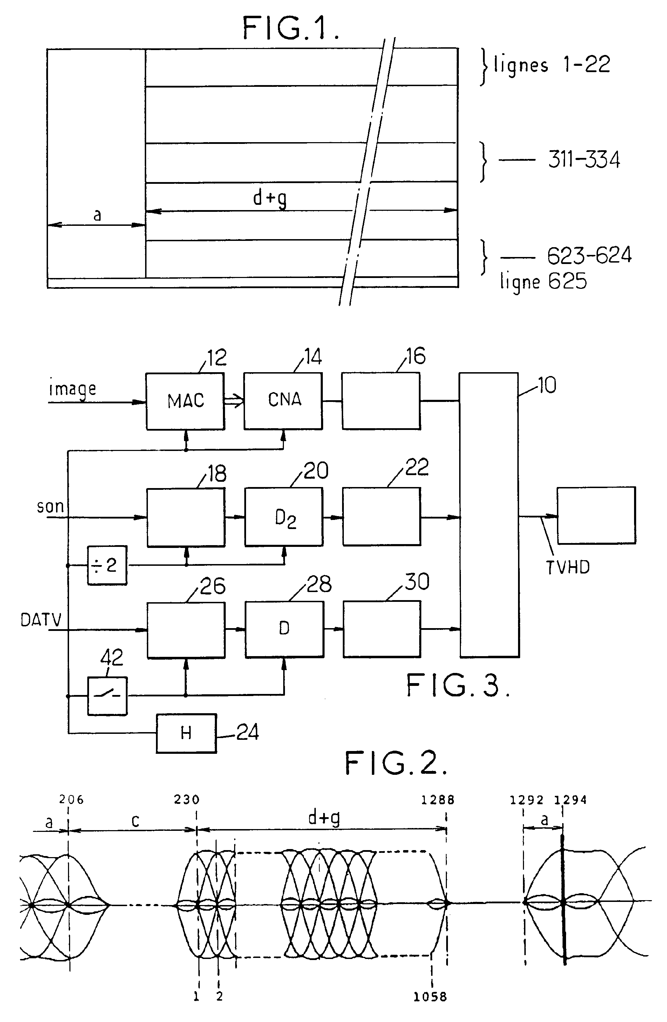

Avant de décrire l'invention proprement dite, il peut être utile de rappeler la structure du multiplex temporel en bande de base prévu par la Norme D2-MAC/PAQUETS. Comme le montre la Figure 1, le nombre de lignes par image est de 625. Le signal analogique d'image occupe les lignes 23 à 310 et 335 à 622, avec un ordre d'entrelacement de 2. Les signaux numériques de son et données occupent les périodes de suppression de ligne sur l'ensemble des lignes 1 à 624, ainsi que la totalité de la ligne 625, affectée à des informations de service. Les intervalles de suppression de trame de la partie du multiplex affectée à l'image sont également disponibles pour la transmission d'informations numériques.

Conformément à la Norme D2-MAC/PAQUETS, dont on pourra trouver une description complète dans le document dénommé "Spécification du Système D2-MAC/PAQUETS" déjà mentionné, le multiplex son/données occupe 623 salves numériques, dans les lignes 1 à 623, sous forme d'un signal numérique codé sous forme duobinaire et émis à un débit instantané de 10,125 Mbits/s. Cependant, le multiplex temporel est défini sous forme d'échantillons à 20,25 Mbits/s. Pour le son et les données, les échantillons sont doublés, les échantillons impairs représentant les transitions après filtrage.

Conformément à l'invention, certaines au moins des lignes de la suppression trame (par exemple les lignes 1 à 22 et 311 à 328) sont utilisées pour transmettre des données complémentaires associées à l'image. Sur la Figure 2, où les nombres portés par la ligne supérieure sont des numéros d'échantillons, tandis que les nombres portés par la ligne inférieure sont des numéros d'éléments binaires ou "bits", on trouve successivement, sur une ligne :

pendant une durée a, une salve de données codées en duobinaire, à un débit de 10,125 Mbits/s et précédée d'un mot de synchronisation de ligne,

une période c de clampage et de transition, et

une période d+g (correspondant à la durée d'émission des signaux de chrominance et de luminance dans la partie image) occupée par les données complémentaires associées au signal d'image, sous forme codée en duobinaire avec un débit de 20,25 Mbits/s.

Une telle structure est totalement distincte de celles qui ont été antérieurement proposées, utilisant une partie des durées normalement affectées au retour ligne et/ou au retour trame pour transmettre des signaux d'image supplémentaires (WO-A-8500492), ce qui fait disparaître la compatibilité avec la Norme X-MAC/PAQUETS.

La Figure 3 montre uniquement la constitution de principe de la partie de l'émetteur du dispositif de diffusion qui est concernée par l'invention. Il s'agit de celle qui génère le signal de modulation, qui est ensuite utilisé pour moduler en fréquence une porteuse. Cette partie comporte un multiplexeur temporel 10 fournissant un signal qui est ensuite appliqué à un modulateur, éventuellement après filtrage et correction de maintien.

Le multiplexeur 10 comporte trois voies d'entrée, respectivement affectées au signal d'image, au signal numérique de son et données à 10,125 Mbits/s et au signal numérique de données complémentaires DATV à 20,25 Mbits/s.

## Voie image MAC

Le signal d'image MAC à haute définition est constitué d'une séquence d'échantillons indépendants, de durée T égale à 49,4 ns, correspondant à une fréquence $1/T = 20,25$ MHz.

Les échantillons sortant du codeur 12 sont appliqués à un convertisseur numérique/analogique 14. Les échantillons analogiques sont appliqués à un filtre destiné à écarter, éventuellement en coopération avec un autre filtre prévu dans le récepteur, l'interférence intersymboles (ISI) entre les différents échantillons transmis. On peut notamment utiliser un filtre 16 de type demi-Nyquist et un filtre identique à la réception.

La fonction de transfert théorique d'un tel filtre a pour expression :

$$H(f) = 1 \qquad\qquad pour \ |f| < (1-\alpha)/2T$$

$$H(f) = \sqrt{\frac{1}{2} + \frac{1}{2} \ sin \ \left[\frac{\pi/2 - \pi fT}{\alpha}\right]}$$

$$pour \ (1-\alpha)/2T < |f| < (1+\alpha)/2T$$

$$H(f) : O \ pour \ |f| > (1+\alpha)/2T.$$

Le coefficient $\alpha$, dit coefficient de retombée et fréquemment désigné par l'appellation anglo-saxonne "roll-off", est choisi en fonction de la largeur de bande. En pratique, on peut choisir $\alpha = 0,2$ pour limiter la largeur de bande à 12,15 MHz.

## Voie son et données

La voie son et données peut avoir une constitution de principe classique et comporter un circuit de compression 18 qui reçoit les informations numériques binaires de son et de données et les restitue sous forme de salves ayant un débit instantané égal à 10,125 Mbits/s, en utilisant une horloge 24 commune à l'ensemble du dispositif. Le signal binaire de sortie du circuit de compression 18 est appliqué à un codeur duobinaire 20 comportant un précodage destiné à éviter la propagation des erreurs. Ce codeur peut être du genre décrit dans le document "Spécification du Système D2-MAC/PAQUETS" déjà mentionné ou dans le document EP-A-1679 093 correspondant à la demande FR-A-2565445 des Etablissements demandeurs.

Le codeur est suivi d'un filtre de mise en forme et de correction de maintien. Ce filtre peut avoir une des constitutions déja proposées. Cependant, étant donné que l'invention associe un signal numérique à 20,25 Mbits/s au signal à 10,125 Mbits/s représentant le son et les données, on verra plus loin que d'autres types de filtrage peuvent être plus avantageux.

## Voie de données complémentaires

Enfin, la voie affectée aux données complémentaires DATV a une constitution similaire à la précédente. Elle comporte un circuit de compression 26, un codeur duobinaire 28 et un filtre 30.

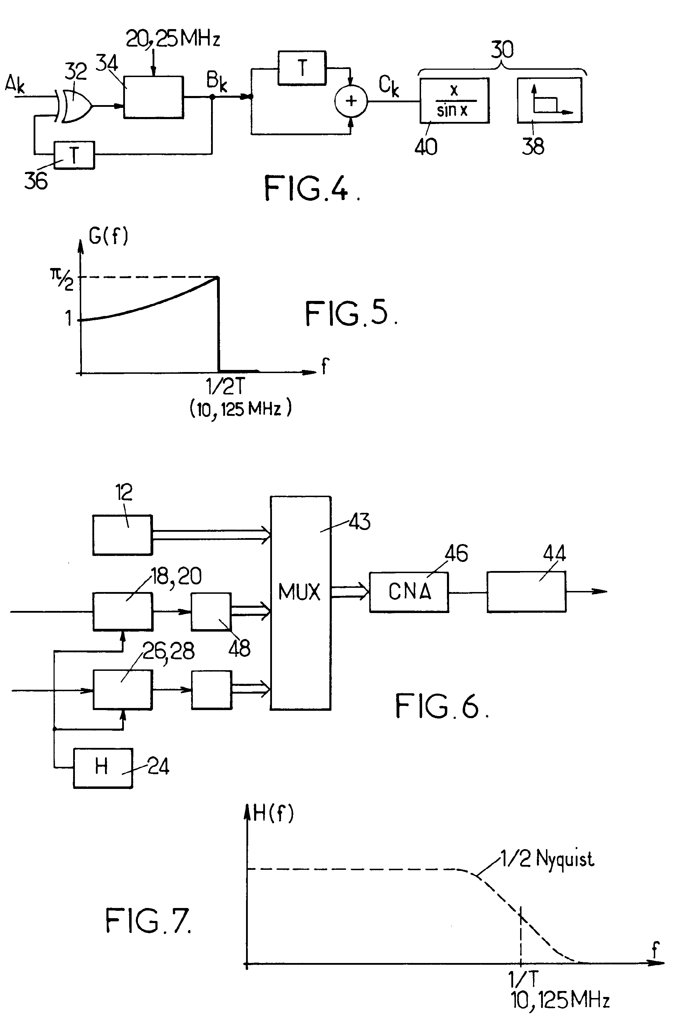

La Figure 4 montre avec davantage de détails la constitution du codeur et du filtre. Le codeur reçoit les données binaires $A_k$ à un débit instantané égal à 20,25 Mbits/s. Il comprend, en succcession, un précodeur et un codeur duobinaire proprement dit. Le précodeur comporte une porte OU EXCLUSIF 32, un échantillonneur 34 et un élément de retard 36 rebouclé sur l'entrée de façon que la donnée binaire de sortie $B_k$ soit donnée par :

$$B_k = \overline{A}_k \oplus B_{k-1}$$

Les données $B_k$, de valeur 0 ou 1, sont converties en une suite de données $C_k$ de valeur 1 ou -1, conformément à l'équation $C_k = 2B_k-1$.

Le codeur duobinaire proprement dit, constitué d'un additionneur et d'un élément de retard, réalise de son côté l'opération :

$$Y_k = A(C_k + C_{k-1})/2$$

Pour un signal de luminance de 1 Volt entre les niveaux de noir et de blanc, on choisit A = 0,4 Volt. Les

4

valeurs possibles de $Y_k$ sont :

Si $A_k = 0$,        alors $Y_k = 0$

Si $A_k = 1$,        alors $Y_k = \pm A$

Le filtre 30 a un double rôle. Il limite l'encombrement spectral du signal transmis. En coopération avec le filtre de réception, il évite l'interférence intersymboles aux instants d'échantillonnage.

Le filtre 30 peut, dans ce but, avoir diverses constitutions.

Une première solution, déjà décrite dans le document EP-A-169 093, consiste à utiliser à l'émission un filtre rectangulaire 38 précédé d'un filtre de correction de maintien 40 en x/sin x destiné à "blanchir" le spectre à l'émission, c'est-à-dire à transformer les symboles rectangulaires de durée I en impulsions de Diracet à prévoir à la réception un filtrage complémentaire.

Mais, étant donné que la transmission se fait en modulation de fréquence, cette répartition du filtrage ne conduit pas toujours aux performances optimales vis-à-vis du bruit. Il peut être plus avantageux d'utiliser à l'émission un filtre 38 qui renforce les fréquences élevées du spectre et, à la réception, un filtre complémentaire.

Un réseau de pré-accentuation est prévu dans le cas d'un émetteur D2-MAC-PAQUETS classique, pour optimiser les performances en présence de bruit. La fonction de transfert d'un tel réseau a été donnée dans le document EP-A-169 093 déjà cité. Mais ce réseau de pré-accentuation ne conduit pas aux performances optimales pour le signal numérique DATV à 20,25 Mbits/s. Les études ont montré qu'un gain substantiel vis-à-vis du bruit peut être obtenu par une mise en forme complémentaire et on a notamment trouvé que des performances proches de l'optimum sont atteintes avec un filtre ayant la fonction de transfert montrée en Figure 5 :

$$G(f) \;=\; \frac{\pi\,f\,T}{\sin\,(\pi f T)} \qquad \text{pour } |f| \leqslant 1/2T \text{ (avec } 1/T = 20,25 \text{ MHz)}$$

$$G(f) \;=\; O \qquad \text{pour } |f| > 1/2T$$

Ce filtre présente la même réponse en amplitude en fonction de la fréquence que celui utilisé pour la correction de maintien (filtre 40 de la Figure 4) et on verra que cette similitude facilite la réalisation pratique du système.

Le récepteur doit de son côté comporter un filtre complémentaire, c'est-à-dire de type sin x/x, pour contribuer à la suppression de l'interférence intersymboles.

Il est souhaitable d'interrompre l'application du signal d'horloge appliqué à la voie DATV en dehors des périodes d'émission du signal correspondant, afin de faciliter le décodage du signal duobinaire. On peut alors utiliser, à la réception, un décodage selon l'algorithme de Viterbi dont on trouvera une description dans la demande de brevet français FR-A-2 606 575 des Etablissements demandeurs. Pour cela, on peut prévoir un interrupteur 42 commandé par le multiplexeur 10.

Dans la constitution de principe montrée en Figure 3, trois filtres analogiques 16, 22 et 30 sont nécessaires, respectivement pour la voie image MAC, la voie duobinaire à 10,125 Mbits et la voie duobinaire à 20,25 Mbits/s.

Il est possible d'utiliser un seul filtre analogique, placé en aval d'un multiplexeur numérique 43, à condition d'effectuer un préfiltrage numérique sur les données codées en duobinaire. La Figure 6 montre une constitution possible d'un système répondant à cette condition. Sur cette Figure, les éléments déjà décrits sur la Figure 3 portent le même numéro de référence.

Il faut tout d'abord remarquer que le codage duobinaire correspond, dans le domaine des fréquences, à un filtrage dont le module F(f) de la fonction de transfert est :

$$F(f) \;=\; |\cos\,(\pi f T)|$$

où T représente la durée symbole, qui est de 49,4 ns pour 20,25 MHz et de 98,8 ns pour 10,125 MHz.

On sait par aileurs que le critère de Nyquist permet de transmettre, sans perdre d'informations, un signal filtré à [ 0 ; 1/2T ].

Le filtre analogique de sortie unique 44 peut être le filtre demi-Nyquist applicable au signal d'image MAC montré en Figure 7.

Le préfiltre numérique 48 sur la voie de données à 10,125 Mbits/s peut alors être défini. Le préfiltrage devra s'effectuer à la fréquence de 20,25 MHz et sa réponse implulsionnelle devra être :

$$h(x) \;=\; \frac{\cos \pi x/2}{1-x^2} \qquad \text{avec } x = 2t/T \text{ et } 1/T = 20,25 \text{ MHz}$$

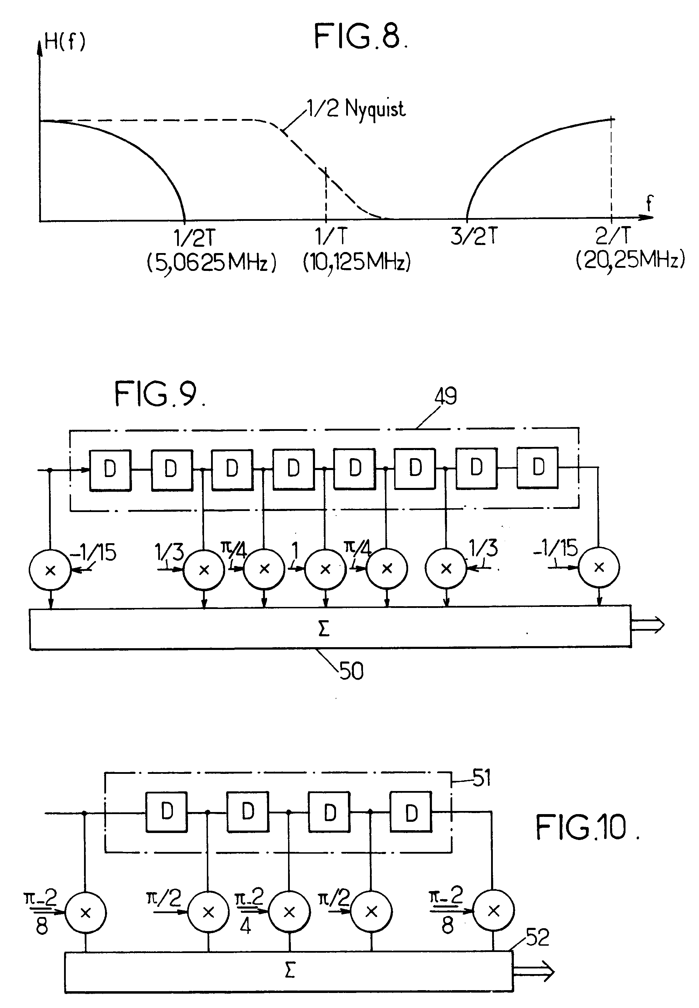

montrée en Figure 8. Les coefficients sont alors, pour t = kT/2 :

; ...; 0; -1/15; 0; 1/3; $\pi/4$; 1; $\pi/4$; 1/3; 0; -1/15; 0; ...;

Si on accepte de se limiter aux premiers lobes secondaires, ce filtrage peut être réalisé à l'aide d'un filtre transverse non récursif à sept coefficients seulement, avec un schéma qui est celui de la Figure 9, chaque délai D correspondant à un décalage à une fréquence de 20,25 MHz. On voit que le filtre peut avoir une constitution simple, puisqu'il se limite à un registre à décalage 49, à sept multiplieurs et un circuit de sommation 50.

La voie DATV ne nécessite pas de filtre de limitation de bande, car le filtre analogique de sortie 44 limite la bande passante à 1/2T (1+α).

Le préfiltrage à effectuer est donc le codage duobinaire simple, équivalent à un filtrage en cosinus, suivi d'une mise en forme par un filtre ayant une fonction de transfert du genre montré en Figure 5, c'est-à-dire $\pi f$ T/sin $\pi fT$ de 0 à 1/2T.

Dans cet intervalle [0, 1/2T], cette fonction peut être simulée avec une approximation suffisante par un filtre ayant la fonction de transfert :

$$\pi/2 - (\pi/2-1).\cos \pi fT$$

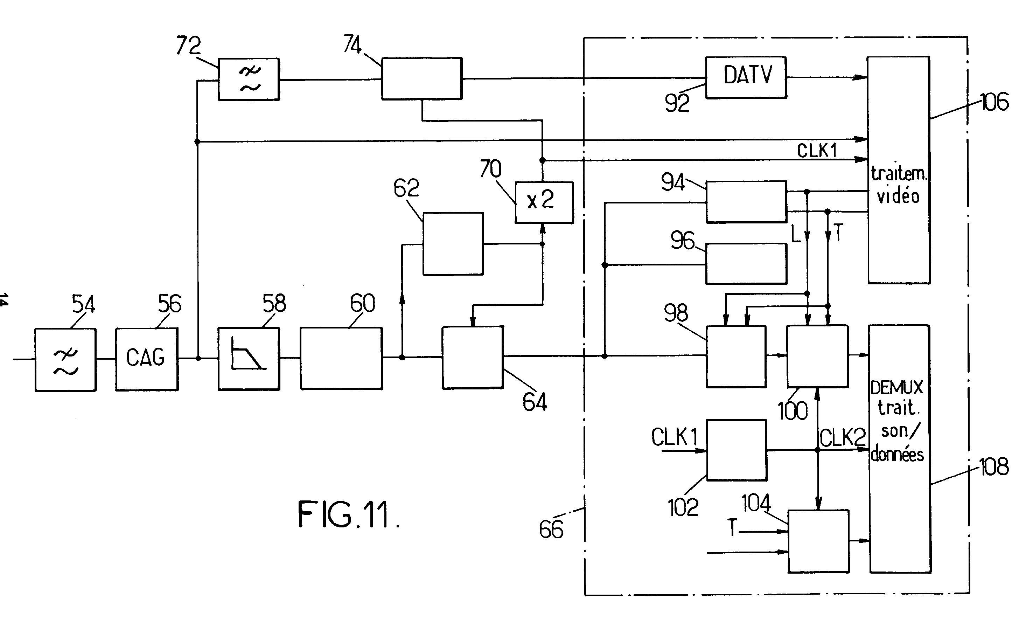

L'erreur maximale correspondant à cette approximation est de 6% environ. Le filtre peut avoir la constitution montrée en Figure 10, chaque délai D correspondant à un décalage à fréquence de 40,5 MHz. Il suffit cette fois d'un registre à décalage 51, de cinq multiplieurs et d'un sommateur 52.

Le dispositif peut comporter une seule horloge, à 40,5 MHz. Il suffit en effet de doubler le nombre des décalages dans le préfiltre de la Figure 9 qui fonctionne à 20,25 MHz, pour permettre la commande par la même horloge que celle du registre 51.

Chacun des récepteurs du dispositif peut avoir la constitution de principe montrée en Figure 11. Le signal reçu est appliqué à une voie commune qui comprend un filtre demi-Nyquist 54 puis un circuit 56 de commande automatique de gain et de restitution de la composante continue. Le signal sortant du circuit 56 est divisé en trois voies, qui seront successivement décrites.

La voie "son et données" à modulation D2, à 10,125 Mbits/s, comporte un filtre complémentaire passe-bas 58 limitant la bande à 5 MHz environ. Le signal filtré est appliqué au décodeur duobinaire 60 dont la sortie attaque un circuit de récupération d'horloge 62 et un échantillonneur 64 à la fréquence d'horloge récupérée. Le signal démodulé obtenu est appliqué au démultiplexeur 66 de signal diffusé.

La voie image MAC se limite à un circuit d'amenée à un circuit de traitement video 68 appartenant au démultiplexeur 66 et dans lequel sont réalisés un échantillonnage à 20,25 MHz, à la fréquence fournie par un doubleur 70, la décompression des signaux de luminance et de différence de couleur et la restitution de l'image à haute définition.

Enfin, la voie de données complémentaires d'assistance comporte un filtre passe-bas supplémentaire 72 limitant la bande à 8 MHz environ. Si le filtre de mise en forme à l'émission est rectangulaire, on cherche à donner à ce filtre passe-bas la fonction de transfert :

G(f) = 1        pour f $\leqq$ 8MHz

G(f) = 0        pour f > 8 MHz.

Dans le cas d'un filtre de mise en forme à l'émission en x/sin x, le filtre passe-bas de réception aura pour fonction de transfert :

$$G(f) = \frac{\sin \pi (f/20,25)}{\pi f/20,25} \quad \text{pour } f \leqslant 8 \text{ MHz}$$

$$G(f) = 0 \quad \text{pour } f > 8 \text{ MHz}.$$

Le filtre 72 est suivi d'un circuit 74 d'échantillonnage à la fréquence de 20,25 MHz fournie par le doubleur 70 et de décodage duobinaire.

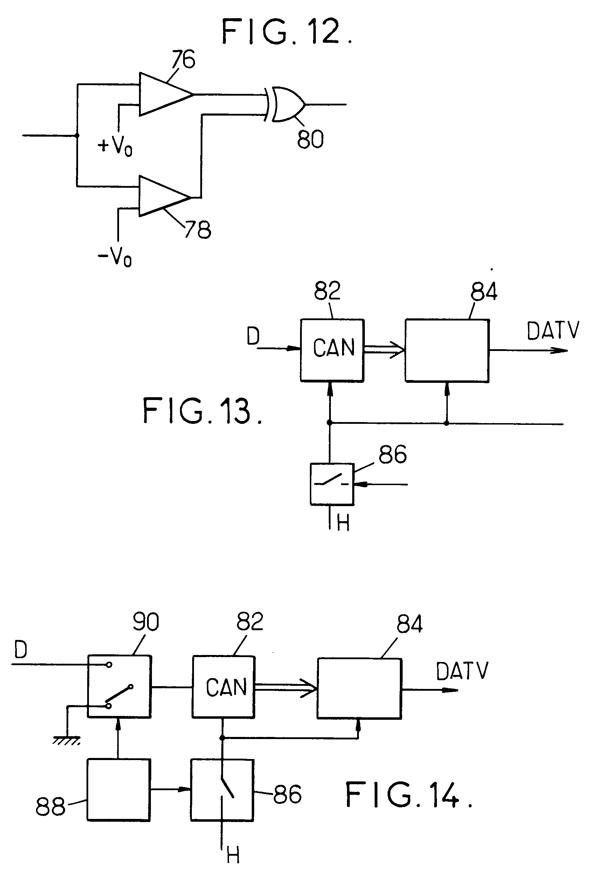

Les décodages duobinaires peuvent être du type classique à seuils illustré sur la Figure 12, comportant deux comparateurs 76 et 78 à seuils +Vo et -Vo et une porte OU EXCLUSIF 80.

Il est cependant préférable d'utiliser, au lieu d'un décodeur duobinaire classique, dont le critère de décision est la comparaison des échantillons reçus avec deux seuils, un décodeur de Viterbi tel que celui décrit dans la demande de brevet FR-A-2606575 des Etablissements demandeurs.

Un premier mode de réalisation utilisant un tel décodeur est montré en Figure 13. Il comprend un convertisseur analogique/numérique 82 (par exemple sur 6 bits) suivi du décodeur de Viterbi 84 proprement dit. Le décodeur 84 a pour critère de décision le chemin le plus vraisemblable parmi l'ensemble des chemins possibles du code sur une durée limitée à quelques symboles, 20 à 40 habituellement (un chemin représentant une suite d'échantillons transmis). L'arrivée du signal d'horloge H à 20,25 MHz au convertisseur 82 et au décodeur 84 est interrompue en dehors d'une fenêtre temporelle encadrant les salves de données d'assistance par un interrupteur électronique 86 commandé par un signal de validation provenant d'un générateur de synchronisation de lignes/trame appartenant au démultiplexeur 66.

Ce mode de décodage entraîne un retard à la décision : la décision sur l'échantillon reçu à l'instant t = nT n'est prise qu'après réception de l'échantillon reçu à l'instant t = (n+p)T, avec p compris entre 20 et 40. En fonctionnement par salves, ce retard inévitable a pour conséquence que les derniers bits de la salve numérique associée à la trame d'ordre N ne seront décodés que lorsque la salve suivante associée à la trame N+1 aura été reçue, ce qui impose de prévoir des éléments de mémoire dans le récepteur et entraîne un retard d'au moins une trame entre les données décodées et le signal d'horloge associé.

Il est possible d'écarter cet inconvénient à condition de s'imposer la condition supplémentaire que le dernier bit n de chaque salve soit tel que

$$An = 1$$

On peut en effet dans ce cas faire fonctionner le décodeur de Viterbi de la façon suivante : après réception du dernier échantillon de chaque salve à 20,25 Mbits/s, on envoie au décodeur un nombre pair d'échantillons de niveau "zéro (Yi=0), ce qui permet de vider les registres du décodeur et de décoder toute la salve. Puis le fonctionnement du décodeur est interrompu jusqu'à la salve suivante.

Dans ce mode de fonctionnement, le dernier échantillon de la salve est décodé avec une probabilité d'erreur supérieure à celle des autres échantillons ; c'est pourquoi on impose un bit de bourrage égal à "1" en fin de salve afin de ne pas avoir une dégradation des performances par rapport au fonctionnement précédemment décrit.

La Figure 14 montre la constitution de principe d'un décodeur de Viterbi utilisant cette solution, les organes correspondant à ceux de la Figure 13 étant désignés par le même numéro de référence.

La base de temps 88 commandée à partir du démultiplexeur 66 commande un commutateur 90 qui, après réception du dernier échantillon de chaque salve, constitué par un bit égal à 1, force à zéro le signal d'entrée du décodeur pendant une durée suffisante pour le décodage du dernier bit de la salve. Il suffit pour cela de 20 à 40 périodes d'horloge, suivant le cas.

La base de temps 88 commande ensuite l'interrupteur 86 pour interrompre l'application du signal d'horloge jusqu'à réception du premier échantillon de la salve suivante.

Les données DATV à 20,25 Mbits/s sont dans tous les cas appliqués à un circuit 92 de traitement et d'exploitation des données d'assistance permettant de corriger l'image reçue en fonction de leur contenu.

Le démultiplexeur 66 a une constitution classique et il n'est donc pas nécessaire de le décrire en détail. Il comporte, alimentés par la sortie de l'échantillonneur 64 :
– un générateur 94 de synchronisation de ligne L et de trame T ;
– un circuit 96 de traitement de la ligne 625, non concerné par l'invention ;
– une branche de prélèvement du signal de son et de données, comportant successivement un circuit de débrassage et de désentrelacement 98 et un convertisseur 100 de débit de données.

Un générateur d'horloge 102 fournit, à partir du signal CLK1 à 20,25 MHz provenant du doubleur 70, un signal CLK2 nécessaire au convertisseur 100 et à un marquer 104 des adresses de paquets qui fournit un signal de validation VAL.

Enfin, un circuit de traitement video 106 reçoit les signaux de la seconde voie, CLK 1, L, F et DATV et élabore, à partir d'eux, les signaux d'image. Un second circuit de démultiplexage et de traitement recevant les signaux en provenance des circuits 100, 102 et 104 sépare le son et les données et les met dans la forme requise pour leur restitution.

On peut remarquer que certains des composants supplémentaires nécessaires pour mettre en oeuvre l'invention doivent également être prévus dans les décodeurs mixtes destinés à recevoir les émissions en D-MAC (c'est-à-dire en duobinaire à 20,25 Mbits/s) aussi bien qu'en D2-MAC.

En conséquence, les adjonctions requises pour permettre la réception d'images TVHD sont alors très limitées.

A titre d'exemple, on peut indiquer que les performances ci-après ont été obtenues expérimentalement et par simulation dans le cas d'une transmission par satellite en modulation de fréquence avec des paramètres de modulation conformes à la spécification D2-MAC/PAQUETS. L'amplitude crête-à-crête des données à 20,25 Mbits/s après codage duobinaire et avant le filtre de mise en forme était égale à 0,8 Volt pour un signal d'image de 1 Volt.

Les caractéristiques du démodulateur du récepteur étaient les suivantes :
Filtre à fréquence intermédiaire : 27 MHz
Démodulateur du type limiteur-discriminateur
Filtre passe-bas pour les données à 20,25 Mbits/s conforme à celui précédemment décrit.

Le tableau I ci-dessous donne pour le signal numérique à 20,25 Mbits/s le taux d'erreur TE en fonction du rapport porteuse sur bruit C/N dans 27 MHz pour les filtres de mise en forme suivants :
- filtre rectangulaire de fonction de transfert :

$$\begin{cases} G(f) = 1 & \text{pour } |f| \leqslant 1/2T \\ G(f) = 0 & \text{pour } |f| > 1/2T \end{cases}$$

- filtre en x /sinx de fonction de transfert :

$$\begin{cases} G(f) = \dfrac{\pi\,f\,T}{\sin\,(\pi\,f\,T)} & \text{pour } |f| \leqslant 1/2T \\ G(f) = 0 & \text{pour } |f| > 1/2T \end{cases}$$

## TABLEAU I

| Réponse du filtre de mise en forme | Type de décodage utilisé | C/N dans 27 MHz pour: $TE=10^{-3}$ | | $TE = 10^{-5}$ |
|---|---|---|---|---|
| | | Mesuré | Simulé | Mesuré |
| rectangu-laire | seuil | 9,6dB | 9,2dB | 12,5dB |
| x / sinx | seuil | 8,9dB | 8,4dB | 11,5dB |
| x / sinx | Viterbi | 8,4dB | 8,1dB | 10,9dB |

On constate que pour un taux d'erreur de $10^{-5}$, la mise en forme en $\pi fT/\sin \pi fT$ permet de gagner 1dB sur le rapport porteuse sur bruit dans le cas du décodage à seuil.

## Revendications

1. Procédé de diffusion de programme de télévision à haute définition, compatible avec la norme D2-MAC-/PAQUETS, utilisant un multiplex temporel de signaux d'image analogiques et de signaux numériques de son et de données, caractérisé en ce qu'on inclut dans le multiplex des données complémentaires d'assistance associées à l'image MAC, sous forme de salves de débit instantané égal à 20,25 Mbits/s émis à la place des signaux d'image pendant certaines au moins des lignes de suppression trame.

2. Procédé selon la revendication 1, caractérisé en ce que les signaux d'image analogiques sont constitués par des échantillons à 20,25 MHz soumis à un filtrage de Nyquist à 10,125 MHz (signal d'image) tandis que les données d'assistance associées à l'image sont transmises à 20,25 Mbits/s pendant des lignes des intervalles de suppression trame.

3. Procédé selon la revendication 1 ou 2, caractérisé en ce que les données d'assistance sont soumises à une mise en forme de type x/sin x pour améliorer les performances vis-à-vis du bruit.

4. Procédé selon la revendication 1, 2 ou 3, caractérisé en ce que les données d'assistance sont récupérées par décodage de Viterbi.

5. Procédé selon l'une quelconque des revendications 1 à 4, caractérisé en ce que le dernier bit de chaque salve duobinaire est fixé au niveau logique 1 avant précodage et en ce que les données sont récupérées par décodage de Viterbi.

6. Procédé selon la revendication 1, caratérisé en ce que les trois composantes du multiplex sont multiplexées sous forme numérique puis soumises à un filtrage commun de type Nyquist, les données duobinaires étant préalablement soumises à un préfiltrage.

7. Procédé selon la revendication 6, caractérisé en ce que le préfiltrage numérique des signaux numériques de son et données s'effectue avec une réponse impulsionnelle de la forme

$$h(x) = \frac{\cos \pi x/2}{1-x^2} \qquad \text{avec } x = 2t/T \text{ et } 1/T = 20{,}25 \text{ MHz}$$

8. Procédé selon la revendication 6 ou 7, caractérisé en ce que le préfiltrage numérique des données complémentaires d'assistance s'effectue par codage duobinaire suivi d'une mise en forme en $\pi ft/ \sin \pi fT$.

9. Procédé selon la revendication 7, caractérisé en ce que la mise en forme est simulée par $\pi/2 - (\pi/2-1).\cos \pi fT$.

10. Récepteur de programme de télévision diffusé par le procédé suivant l'une quelconque des revendications précédentes, comprenant une voie de décodage duobinaire et de récupération d'horloge à 10,125 MHz et une voie video, caractérisé en ce qu'il comprend également une voie de récupération et de décodage des données complémentaires d'assistance comportant un filtre passebas (72), un circuit d'échantillonnage à 20,25 MHz, alimenté par la voie de récupération d'horloge, et de décodage duobinaire (74) et un circuit de traitement desdites données.

## Claims

1. A process for broadcasting high definition television programs, compatible with the D2-MAC/PACKETS standard, using a time multiplex of analogue image signals and of sound-data digital signals, characterized in that additional assistance data associated to the MAC image are inserted in the multiplex as bursts having an instantaneous rate of 20.25 Mbits/s in place of the image signals during some at least of the field blanking lines.

2. Process according to claim 1, characterized in that the analogue image signals consist of samples at a rate of 20.25 MHz subjected to Nyquist filtering at 10.125 MHz (image signal) while the assistance data associated to the image are transmitted at 20.25 Mbits/s during lines of the field blanking intervals.

3. Process according to claim 1 or 2, characterized in that the assistance data are subjected to an operation of shaping of the x/sin x type for improving the performances as regard noise.

4. Process according to claim 1, 2 or 3, characterized in that the assistance data are recovered by Viterbi decoding.

5. Process according to any one of claims 1-4, characterized in that the last bit of each duobinary burst is set to logical level 1 before precoding and in that the data are recovered by Viterbi decoding.

6. Process according to claim 1, characterized in that the three components of the multiplex are multiplexed in digital form and then subjected to a common Nyquist filtering, the duobinary data being previously subjected to prefiltering.

7. Process according to claim 6, characterized in that the digital prefiltering of the digital signals representing sound and data is carried out with an impulse response of the type:

$$h(x) = \frac{\cos \pi x/2}{1-x^2} \text{ with } x = 2t/T \text{ and } 1/T = 20.25 \text{ MHz}$$

8. Process according to claim 6 or 7, characterized in that the digital prefiltering of the additional assistance data is carried out by duobinary encoding followed with shaping of the $\pi ft/ \sin \pi fT$ type.

9. Process according to claim 7, characterized in that shaping is simulated as $\pi/2 - (\pi/2 - 1).\cos \pi fT$.

10. Receiver for receiving a television program broadcasted by the process according to any one of the preceding claims, comprising a channel for duobinary decoding and recovery of a clock at 10.125 MHz and a video channel, characterized in that it further comprises a channel for recovering and decoding the additional assistance data, comprising a low pass filter (72), a circuit for sampling at a frequency of 20.25 MHz, fed by the clock recovery channel, and for duobinary decoding (74) and a circuit for processing said data.

## Patentansprüche

1. Verfahren zum Aussenden eines Fernsehprogramms für Fernsehen mit hoher Auflösung, das mit der Norm D2-MAC/PAQUETS kompatibel ist und das ein Zeitmultiplex von analogen Bildsignalen und digitalen Ton- und Datensignalen verwendet, dadurch gekennzeichnet, daß man in den Multiplex komplementäre Hilfsdaten, die dem MAC-Bild zugeordnet sind, in Form von momentanen Signalstößen von 20,25 Mbits pro Sekunde, die anstelle der Bildsignale während wenigstens einiger Zeilen der Vertikalaustastung ausgesendet werden, einfügt.

2. Verfahren nach Anspruch 1, dadurch gekennzeichnet, daß die analogen Bildsignale aus einer Nyquist-Filterung mit 10,125 MHz (Bildsignal) unterworfenen 20,25-MHz-Abtastungen gebildet sind, während die dem Bild zugeordneten Hilfsdaten mit 20,25 Mbits pro Sekunde während der Zeilen der Vertikalaustastungintervalle gesendet werden.

3. Verfahren nach Anspruch 1 oder 2, dadurch gekennzeichnet, daß die Hilfsdaten zur Verbesserung des Verhaltens gegenüber dem Rauschen einer Formatierung des Typs x/sin x unterzogen werden.

4. Verfahren nach Anspruch 1, 2 oder 3, dadurch gekennzeichnet, daß die Hilfsdaten durch Viterbi-Dekodierung wiedererhalten werden.

5. Verfahren nach einem der Ansprüche 1 bis 4, dadurch gekennzeichnet, daß das letzte Bit jedes duobinären Signalstoßes vor der Prekodierung auf das logische Niveau 1 festgelegt wird und daß die Daten durch Viterbi-Dekodierung wiedergewonnen werden.

6. Verfahren nach Anspruch 1, dadurch gekennzeichnet, daß die drei Komponenten des Multiplex in digitaler Weise gemultiplext und dann einer gemeinsamen Filterung vom Nyquist-Typ unterzogen werden, wobei die duobinären Daten zuvor einer Vorfilterung unterzogen werden.

7. Verfahren nach Anspruch 6, dadurch gekennzeichnet, daß die digitale Vorfilterung der digitalen Ton- und Datensignale mit einer Impulsantwort der Form

$$h(x) = \frac{\cos \pi x/2}{1-x^2} \text{ mit } x = 2t/T \text{ und } 1/T = 20{,}25 \text{ MHz}$$

erfolgt.

8. Verfahren nach Anspruch 6 oder 7, dadurch gekennzeichnet, daß die digitale Vorfilterung der komplementären Hilfsdaten durch duobinäre Kodierung, auf die eine Formatierung mit $\pi fT/ \sin \pi fT$ folgt, erfolgt.

9. Verfahren nach Anspruch 7, dadurch gekennzeichnet, daß die Formatieiung durch $\pi/2 - (\pi/2-1)\cdot\cos \pi fT$ simuliert wird.

10. Empfänger für ein nach dem Verfahren gemäß eines der vorstehenden Ansprüche ausgesendetes Fernsehprogramm, der einen duobinären Dekodier- und 10,125-MHz-Takt-Wiedergewinnungskanal und einen Videokanal aufweist, dadurch gekennzeichnet, daß er ebenfalls einen Dekodier- und Wiedergewinnungskanal für komplementäre Hilfsdaten mit einem Tiefpaßfilter (72), einer Schaltung (74) zum Abtasten mit einem vom Takt-Wiedergewinnungskanal gelieferten 20,25-MHz-Takt und zum duobinären Dekodieren und einer Schaltung zum Verarbeiten der genannten Daten aufweist.

# FIG.1.

lignes 1-22

311-334

a

d+g

623-624
ligne 625

# FIG.3.

image → MAC `12` → CNA `14` → `16` → `10`

TVHD

son → `18` → D₂ `20` → `22`

÷2

DATV → `26` → D `28` → `30`

`42`

H `24`

# FIG.2.

206    230                    1288        1292 1294

a    c              d+g              a

1  2                        1058

FIG.4.

FIG.5.

FIG.6.

FIG.7.

12

## FIG.8.

## FIG.9.

## FIG.10.

FIG.11.

FIG. 12.

FIG. 13.

FIG. 14.